# EUROPEAN PATENT APPLICATION

(11) **EP 3 048 355 A1**
(43) Date of publication of application: **27.07.2016**
(21) Application number: 15151746.3
(22) Date of filing: 20.01.2015
(51) Int. Cl.: F16L 57/06, F16L 11/10

(54) **Protection device for external walls of a hose**

(71) Applicant: Chen, Tsan-Jee, Taipei City 114 (TW)
(72) Inventor: Chen, Tsan-Jee, Taipei City 114 (TW)
(74) Representative: Wittmann, Günther

(57) **Abstract**

A protection device for external walls of a hose is disclosed, which can be bound in a ring form onto the external wall surface of a hose and comprises a first binding component (6) and a second binding component (7) made from non-metallic materials, wherein the first binding component (6) and the second binding component (7) both have a half-notched structure (61, 71), and a positioning part (62, 72) extrudes from an end of the half-notched structure. Herein the positioning part (62, 72) has a buckle head (621, 721) thereon, a plug-in component (622, 722) extends from the front end of the buckle head (621, 721), and the other end of the half-notched structure (61, 71) has a recessed positioning hole (63, 73) which extends toward the interior of the half-notched structure (61, 71) thereby forming a positioning space (64, 74). Since the first binding component (6) and the second binding component (7) are correspondingly installed, when the positioning part (62) of the first binding component (6) is correspondingly inserted into the positioning hole (73) of the second binding component (7) and the positioning part (72) of the second binding component (7) is correspondingly inserted into the positioning hole (63) of the first binding component (6), the half-notched structure (61) of the first binding component (6) and the half-notched structure (71) of the second binding component (7) conjunctively constitute a closed space for buckling onto the external wall surface of the hose so as to protect the external wall of the hose.

## Description

### BACKGROUND OF THE INVENTION

### 1. Field of the Invention

The present invention generally relates to a protection device for external walls of a hose; in particular, it relates to a protection device capable of being bound in a ring form onto the external walls of a hose thus preventing possible accidents caused by frictions generated upon touching the ground.

### 2. Description of Related Art

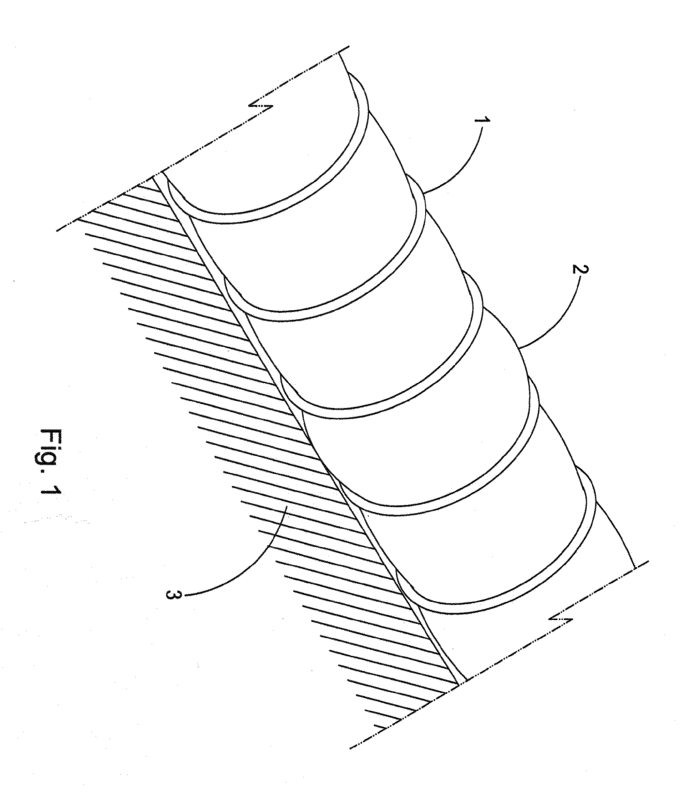

It is very typical to use hoses to carry or transfer liquid or gaseous matters. Such hoses are usually made from plastic, rubber, compound material cloth or non-woven cloth materials, and due to significant hose diameters and heavy weights thereof, it is inevitable to drag them on the ground upon relocating. Figure 1 shows a view for simply one type of conventional hose 1, in which the external wall of the hose 1 is wound by iron wires 2. However, from the Figure it can be found that, because of forcibly pressed and squeezed iron wires, a certain part of the hose 1 may be distorted and extruded; however, upon being dragged on the ground 3, the hose 1 is unavoidably abraded by the ground 3 so the area extruding from the external wall surface of the hose 1 may gradually become thinner due to frictions. Consequently, as the hose wall becomes thinner, it progressively can not withstand the pressure imposed on the internal wall of the hose wall; in a most serious case, the hose wall could burst out and the liquid or gas contained therein may be released.

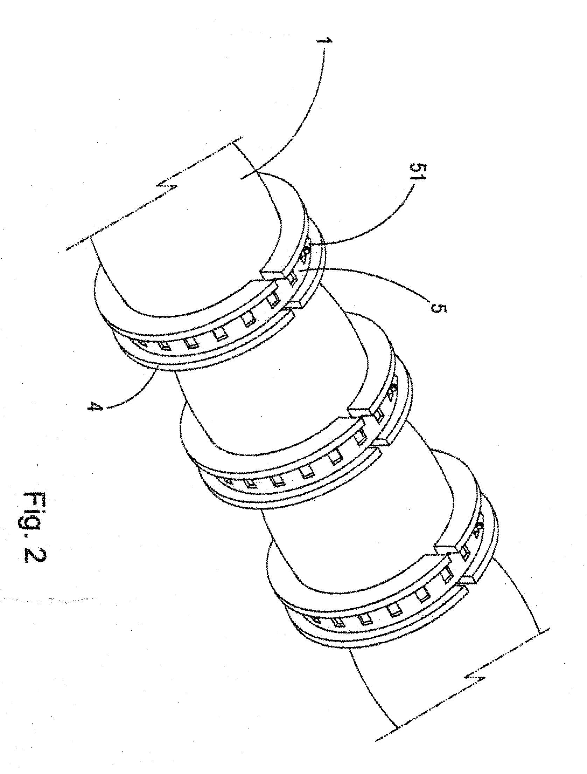

To improve the aforementioned situation, as shown in Figure 2, multiple rubber C-shaped rings 4 are wound on the external wall of the hose 1, and a metallic binding belt 5 is installed to go through the C-shaped rings 4 such that the C-shaped rings 4 can be bound tightly on the external wall of the hose 1. However, there are still drawbacks in such a design; first, the binding belt head 51 of the binding belt 5 is metallic, so, upon dragging the hose 1 on the ground, since the rubber C-shaped rings 4 are flexible, they may be pressed down and distorted thus undesirably causing the binding belt head 51 to overly expose to touch the ground and accordingly generate sparks; suppose the liquid or gas contained in the hose 1 is combustible, or the operation environment in which the hose 1 is moved contains inflammable liquids or gases, the consequence could be catastrophic. Secondly, since the rubber C-shaped rings 4 may become thinner due to frequent frictions with the ground, the excessive exposure of the binding belt head 51 and its contact with the ground may become worse, and the security problem may inevitably occur because of the friction issue as well.

As a result, to overcome such issues in prior art, the present invention applies a protection device to be bound in a ring form on the external wall of the hose, which does not require a metallic binding belt to bind the protection device tightly on the external wall of the hose so that the security issue on spark occurrences due to contact of a conventional metal binding belt with the ground can be effectively eliminated, thus that the present invention can be an optimal solution.

### SUMMARY OF THE INVENTION

The present invention relates to a protection device for external walls of a hose, comprising two half-notched structures that can be conjunctively bound in a ring form to the external wall surface of a hose and constitute a closed space so as to be buckled onto the external wall surface of the hose for protecting the external wall of the hose.

A protection device for external walls of a hose capable of achieving the aforementioned objectives can be bound in a ring form to the external wall surface of a hose, said protection device for external walls of a hose comprising: a first binding component, made from a non-metallic material, in which the first binding component includes a half-notched structure, and an end of the half-notched structure has a protruded positioning part, wherein on the positioning part there extends a buckle head whose front end extends a plug-in component, and the other end of the half-notched structure has a recessed positioning hole which extends toward the interior of the half-notched structure thereby forming a positioning space; a second binding component, made from a non-metallic material, in which the second binding component includes a half-notched structure, and an end of the half-notched structure has a protruded positioning part, wherein on the positioning part there extends a buckle head whose front end extends a plug-in component, and the other end of the half-notched structure has a recessed positioning hole which extends toward the interior of the half-notched structure thereby forming a positioning space; wherein the half-notched structure of the first binding component and the half-notched structure of the second binding component can be in contact with the external wall surface of the hose, the positioning part of the first binding component corresponds to the positioning hole of the second binding component, the positioning part of the second binding component corresponds to the positioning hole of the first binding component such that the buckle head of the first binding component can be positioned into the positioning space of the second binding component and the buckle head of the second binding component can be positioned into the positioning space of the first binding component thereby allowing the half-notched structure of the first binding component and the half-notched structure of the second binding component together to form a closed space in order to be buckled onto the external wall surface of the hose.

More specifically, the buckle head of the first binding component has a narrow-front-wide-reared structure and the width of the positioning space of the second binding component is greater than that of the positioning hole, and, after placing the plug-in component of the first binding component into the positioning hole of the second binding component, the buckle head of the first binding component can be inserted into the positioning space of the second binding component such that the positioning part of the first binding component can be fixed into the positioning space of the second binding component.

More specifically, the second binding component has an opening penetrating through the positioning space of the second binding component so that, via the opening, it is possible to use a tool or by hand to clamp the plug-in component of the first binding component and pull it toward the positioning space of the second binding component such that the plug-in component of the first binding component can extrude from the opening in the positioning space of the second binding component and the buckle head can be inserted into the positioning space of the second binding component.

More specifically, the buckle head of the second binding component has a narrow-front-wide-reared structure and the width of the positioning space of the first binding component is greater than that of the positioning hole, and, after placing the plug-in component of the second binding component into the positioning hole of the first binding component, the buckle head of the second binding component can be inserted into the positioning space of the first binding component such that the positioning part of the second binding component can be fixed into the positioning space of the first binding component.

More specifically, the first binding component has an opening penetrating through the positioning space of the first binding component so that, via the opening, it is possible to use a tool or by hand to clamp the plug-in component of the second binding component and pull it toward the positioning space of the first binding component such that the plug-in component of the second binding component can extrude from the opening in the positioning space of the first binding component and the buckle head can be inserted into the positioning space of the first binding component.

More specifically, the external wall surfaces on the half-notched structures of the first binding component and the second binding component are both arc-shaped.

More specifically, the internal wall surfaces on the half-notched structures of the first binding component and the second binding component are both arc-shaped.

More specifically, the internal wall surfaces of the first binding component and the second binding component have an anti-skid pattern.

More specifically, the external wall surfaces on the half-notched structures of the first binding component and the second binding component are both polygon-shaped.

More specifically, the first binding component and the second binding component are made from one of rubber, gel, silica gel, emulsion, plastic materials or a combination thereof.

### BRIEF DESCRIPTION OF THE DRAWINGS

Figure 1 shows a structural view of a first conventional protection device for external walls of a hose.
Figure 2 shows a structural view of a second conventional protection device for external walls of a hose.
Figure 3A shows a structural, un-assembled view of a protection device for external walls of a hose according to the present invention.
Figure 3B shows a structural, assembled view of a protection device for external walls of a hose according to the present invention.
Figure 3C shows a structural, assembled, cross-sectional view of a protection device for external walls of a hose according to the present invention.
Figure 4A shows a structural, un-assembled, cross-sectional view for a first embodiment of a protection device for external walls of a hose according to the present invention.
Figure 4B shows a structural, assembled, stereo view for the first embodiment of a protection device for external walls of a hose according to the present invention.
Figure 4C shows a structural, assembled, cross-sectional view for the first embodiment of a protection device for external walls of a hose according to the present invention.
Figure 4D shows a cut-off view for the plug-in component in the first embodiment of a protection device for external walls of a hose according to the present invention.
Figure 5 shows a view for a polygon-shaped external wall surface implementation of a protection device for external walls of a hose according to the present invention.

### DETAILED DESCRIPTION OF THE PREFERRED EMBODIMENTS

Other technical contents, aspects and effects in relation to the present invention can be clearly appreciated through the detailed descriptions concerning the preferred embodiments of the present invention in conjunction with the appended drawings.

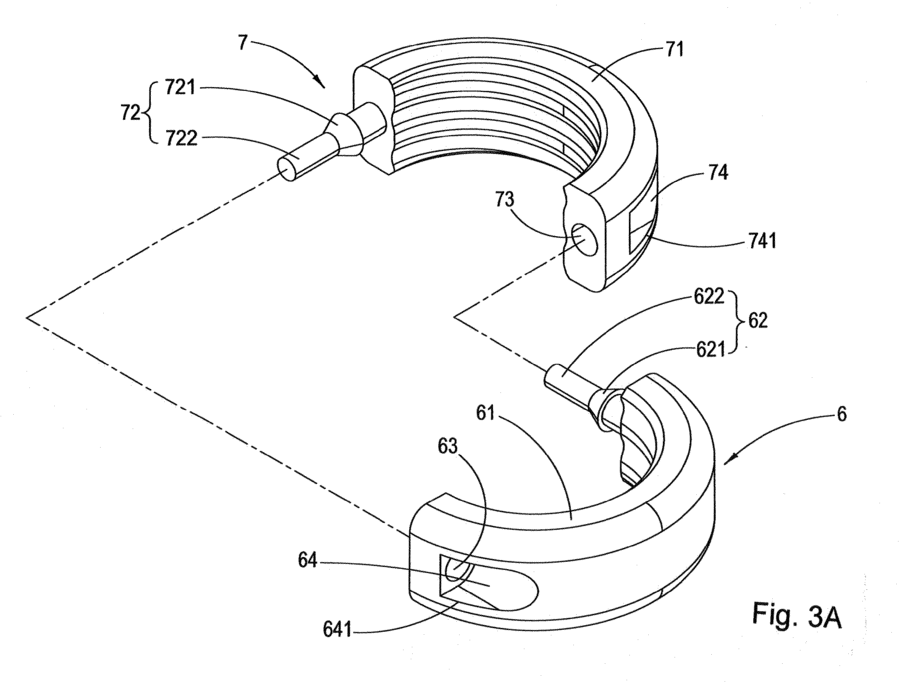

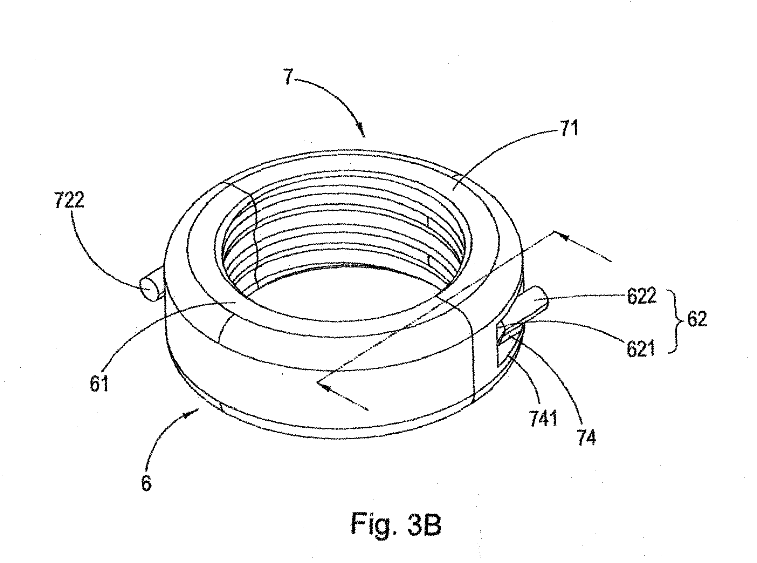

Refer initially to Figures 3A and 3B, wherein a structural, un-assembled view as well as a structural, assembled view of a protection device for external walls of a hose according to the present invention are respectively shown. From the Figures, it can be appreciated that the protection device for external walls of a hose comprises a first binding component 6 and a second binding component 7, wherein the first binding component 6 and the second binding component 7 are made from non-metallic materials, and the first binding component 6 and the second binding component 7 each includes a half-notched structure 61, 71, in which an end of the half-notched structure 61, 71 has a protruded positioning part 62, 72; on the positioning part 62, 72 there extends a buckle head 621, 721 whose front end extends a plug-in component 622, 722, and the other end of the half-notched structure 61, 71 has a recessed positioning hole 63, 73 which extends toward the interior of the half-notched structure 61, 71 thereby forming a positioning space 64, 74.

As shown in Figure 3B, the positioning part 62 of the first binding component 6 corresponds to the positioning hole 73 of the second binding component 7 and the positioning part 72 of the second binding component 7 corresponds to the positioning hole 63 of the first binding component 6; meanwhile, the buckle head 621, 721 of the first binding component 6 and the second binding component 7 has a narrow-front-wide-reared structure and the width of the positioning space 64, 74 of the first binding component 6 and the second binding component 7 is greater than that of the positioning hole 63, 73.

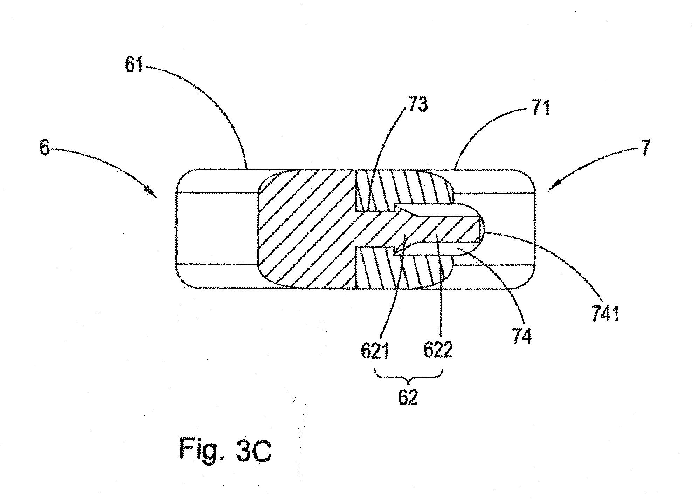

As shown in Figure 3C, after placing the plug-in component 622 of the first binding component 6 into the positioning hole 73 of the second binding component 7, the buckle head 621 of the first binding component 6 can be inserted into the positioning space 74 of the second binding component 7; since the second binding component 7 has an opening 741 penetrating through the positioning space 74 of the second binding component 7, it is possible to, via the opening 741, use a tool or by hand to clamp the plug-in component 622 of the first binding component 6 and pull it toward the positioning space 74 of the second binding component 7 such that the plug-in component 622 of the first binding component 6 can extrude from the opening 741 in the positioning space 74 of the second binding component 7 and the buckle head 621 can be inserted into the positioning space 74 of the second binding component 7.

Moreover, due to the fact that the first binding component 6 and the second binding component 7 have a corresponding structure, therefore, as performing the above-said operations, the plug-in component 722 of the second binding component 7 also enters into the positioning hole 63 of the first binding component 6; and then, since the first binding component 6 has an opening 641 penetrating through the positioning space 64 of the first binding component 6, it is possible to, via the opening 641, use a tool or by hand to clamp the plug-in component 722 of the second binding component 7 and pull it toward the positioning space 64 of the first binding component 6 such that the plug-in component 722 of the second binding component 7 can extrude from the opening 641 in the positioning space 64 of the first binding component 6 and the buckle head 721 can be inserted into the positioning space 64 of the first binding component 6.

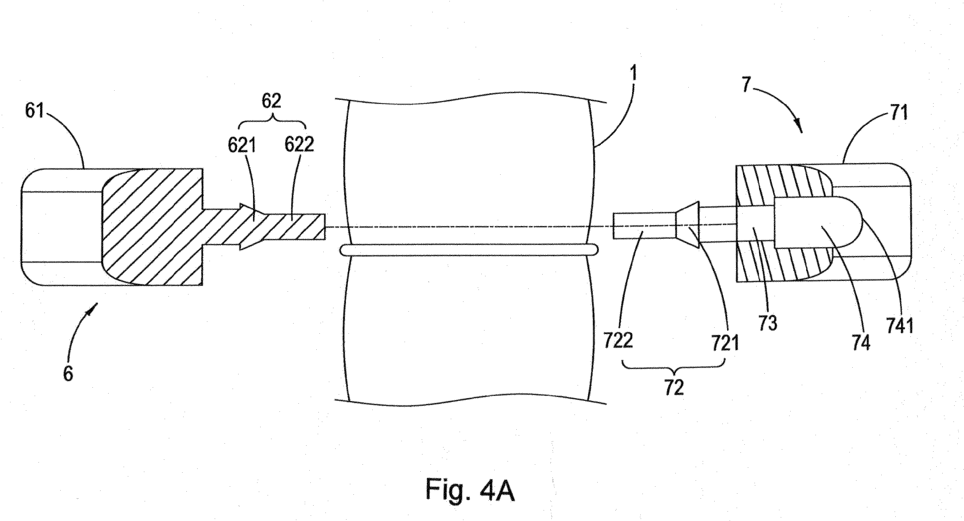

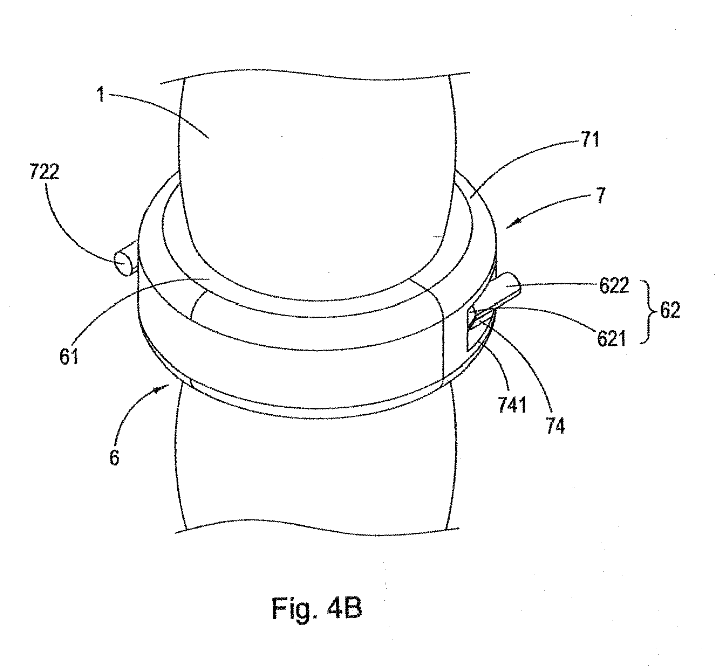

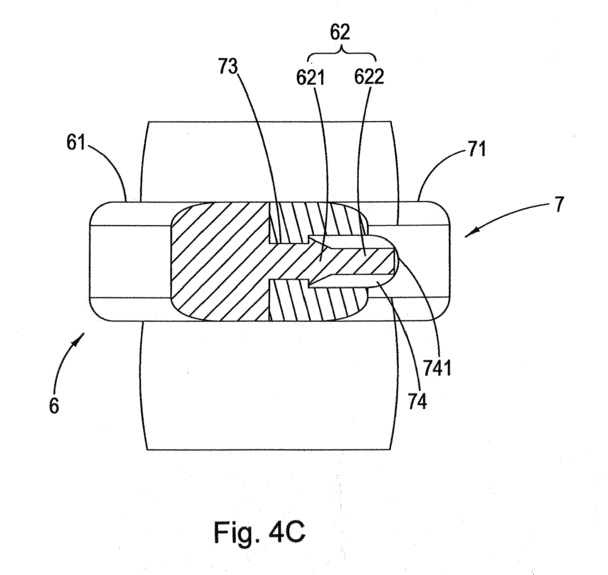

Next, Figures 4A ∼ 4D show an embodiment of combining the first binding component 6 and the second binding component 7 onto a hose 1 wound with iron wires 2. From Figure 4A, it can be seen that the first binding component 6 and the second binding component 7 correspondingly engage with the external wall surface of the hose 1 such that, through the structures, the half-notched structure 61 of the first binding component 6 and the half-notched structure 71 of the second binding component 7 can conjunctively form a closed space. In addition, as shown in Figures 4B and 4C, the buckle head 621 can be inserted into the positioning space 74 of the second binding component 7 (although the other side is not shown, the buckle head 721 can be also inserted into the positioning space 64 of the first binding component 6) such that the first binding component 6 and the second binding component 7 can be together buckled onto the external wall surface of the hose 1.

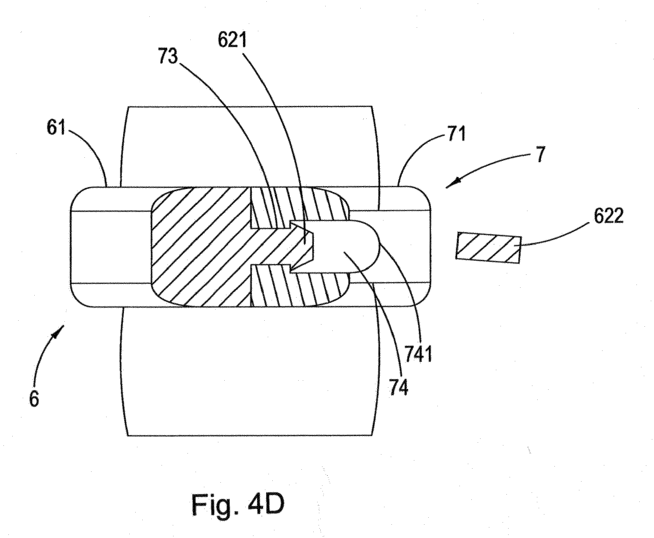

Since the plug-in component 622 of the first binding component 6 may penetrate and extrude from the opening 741 in the positioning space 74 of the second binding component 7 and the plug-in component 722 of the second binding component 7 may penetrate and extrude from the opening 641 in the positioning space 64 of the first binding component 6, in case that the extrusion of the plug-in component 622, 722 is excessive, as shown in Figure 4D, it is possible to cut off the extruded portion of the plug-in component 622 from the opening 741 and the extruded portion of the plug-in component 722 from the opening 641.

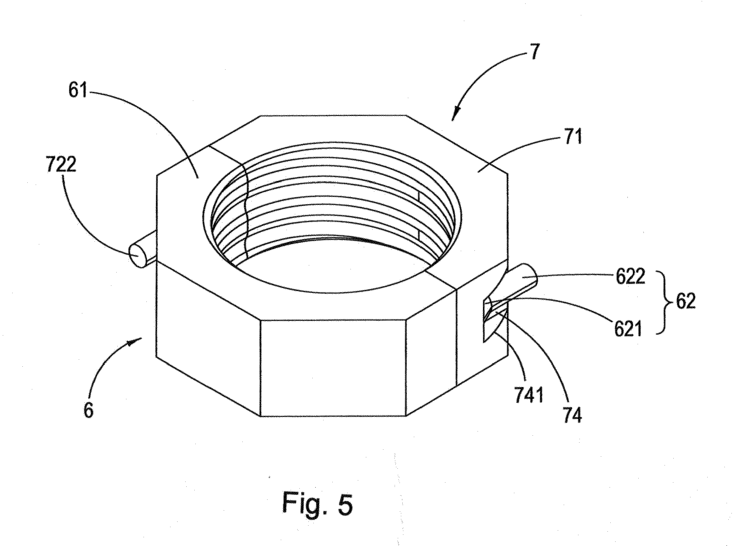

The external wall surface or internal wall surface on the half-notched structure 61, 71 of the first binding component 6 and the second binding component 7 may be arc-shaped (as shown in Figure 3B). However, the external wall surface on the half-notched structure 61, 71 of the first binding component 6 and the second binding component 7 may be also configured to be polygon-shaped, as shown in Figure 5, in which this polygon-shaped structure has multiple planes so that the protection device for external walls of a hose can be better placed on the ground.

Moreover, an anti-skid pattern can be fabricated on the internal wall surface of the half-notched structure 61, 71 of the first binding component 6 and the second binding component 7 to enable a steadier binding onto the external wall surface of the hose 1, and the first binding component 6 and the second binding component 7 are made from one of rubber, gel, silica gel, emulsion, plastic materials or a combination thereof.

Compared with other conventional technologies, the protection device for external walls of a hose according to the present invention provides the following advantages:

1. The present invention utilizes two half-notched structures to be bound in a ring form on the external wall of a hose, in which such two half-notched structures together can form a closed space to be buckled onto the external wall surface of the hose thereby protecting the external wall of the hose;

2. Seeing that the two half-notched structures disclosed in the present invention are made from non-metallic and elastic materials, and capable of being bound tightly onto the external wall surface without any other metallic binding components, the security issue found in prior art technologies can be well addressed.

The present invention has been disclosed through the detailed descriptions of the aforementioned embodiments, but such illustrations are by no means used to restrict the present invention. Skilled ones in relevant fields of the present invention can certainly devise any applicable alternations and modifications after comprehending the aforementioned technical characteristics and embodiments of the present invention without departing from the spirit and scope thereof. Hence, the scope of the present invention to be protected under patent laws should be delineated in accordance with the claims set forth hereunder in the present specification.

## Claims

1. A protection device for external walls of a hose, which can be bound in a ring form onto the surface of the external walls of a hose, the protection device for external walls of a hose comprising:
a first binding component (6), made from a non-metallic material, in which the first binding component (6) includes a half-notched structure (61), and an end of the half-notched structure (61) has a protruded positioning part (62), wherein on the positioning part (62) there extends a buckle head (621) whose front end extends a plug-in component (622), and the other end of the half-notched structure (61) has a recessed positioning hole (63) which extends toward the interior of the half-notched structure (61) thereby forming a positioning space (64);
a second binding component (7), made from a non-metallic material, in which the second binding component (7) includes a half-notched structure (71), and an end of the half-notched structure (71) has a protruded positioning part (72), wherein on the positioning part (72) there extends a buckle head (721) whose front end extends a plug-in component (722), and the other end of the half-notched structure (71) has a recessed positioning hole (73) which extends toward the interior of the half-notched structure (71) thereby forming a positioning space (74);
wherein the half-notched structure (61) of the first binding component (6) can be combined with the half-notched structure (71) of the second binding component (7), the positioning part (62) of the first binding component (6) corresponds to the positioning hole (73) of the second binding component (7), the positioning part (72) of the second binding component (7) corresponds to the positioning hole (63) of the first binding component (6) such that the buckle head (621) of the first binding component (6) can be positioned into the positioning space (74) of the second binding component (7) and the buckle head (721) of the second binding component (7) can be positioned into the positioning space (64) of the first binding component (6) thereby allowing the half-notched structure (61) of the first binding component (6) and the half-notched structure (71) of the second binding component (7) together to form a closed space.

2. The protection device for external walls of a hose according to Claim 1, wherein the buckle head (621) of the first binding component (6) has a narrow-front-wide-reared structure and the width of the positioning space (74) of the second binding component (7) is greater than that of the positioning hole (73), and, after placing the plug-in component (622) of the first binding component (6) into the positioning hole (73) of the second binding component (7), the buckle head (621) of the first binding component (6) can be inserted into the positioning space (74) of the second binding component (7) such that the positioning part (62) of the first binding component (6) can be fixed into the positioning space (74) of the second binding component (7).

3. The protection device for external walls of a hose according to Claim 2, wherein the second binding component (7) has an opening (741) penetrating through the positioning space (74) of the second binding component (7) to allow the insertion of the plug-in component (622) of the first binding component (6) into the positioning space (74) of the second binding component (7) via the opening (741) such that the plug-in component (622) of the first binding component (6) can extrude from the opening (741) in the positioning space (74) of the second binding component (7) and the buckle head (621) can be inserted into the positioning space (74) of the second binding component (7).

4. The protection device for external walls of a hose according to Claim 1, wherein the buckle head (721) of the second binding component (7) has a narrow-front-wide-reared structure and the width of the positioning space of the first binding component (6) is greater than that of the positioning hole (63), and, after placing the plug-in component (722) of the second binding component (7) into the positioning hole (63) of the first binding component (6), the buckle head (721) of the second binding component (7) can be inserted into the positioning space (64) of the first binding component (6) such that the positioning part (72) of the second binding component (7) can be fixed into the positioning space (64) of the first binding component (6).

5. The protection device for external walls of a hose according to Claim 4, wherein the first binding component (6) has an opening (641) penetrating through the positioning space (64) of the first binding component (6) to allow the insertion of the plug-in component (722) of the second binding component (7) into the positioning space (64) of the first binding component (6) via the opening (641) such that the plug-in component (722) of the second binding component (7) can extrude from the opening (641) in the positioning space (64) of the first binding component (6) and the buckle head (721) can be inserted into the positioning space (64) of the first binding component (6).

6. The protection device for external walls of a hose according to Claim 1, wherein the external wall surfaces on the half-notched structures (61), (71) of the first binding component (6) and the second binding component (7) are both arc-shaped.

7. The protection device for external walls of a hose according to Claim 1, wherein the internal wall surfaces on the half-notched structures (61), (71) of the first binding component (6) and the second binding component (7) are both arc-shaped.

8. The protection device for external walls of a hose according to Claim 1, wherein the internal wall surfaces of the first binding component (6) and the second binding component (7) have an anti-skid pattern.

9. The protection device for external walls of a hose according to Claim 1, wherein the external wall surfaces on the half-notched structures (61), (71) of the first binding component (6) and the second binding component (7) are both polygon-shaped.

10. The protection device for external walls of a hose according to Claim 1, wherein the first binding component (6) and the second binding component (7) are made from one of rubber, gel, silica gel, emulsion, plastic materials or a combination thereof.
